# DEMANDE DE BREVET EUROPEEN

(11) **EP 4 212 433 A1**
(43) Date de publication de la demande: **19.07.2023**
(21) Numéro de dépôt: 23151100.7
(22) Date de dépôt: 11.01.2023
(51) Int. Cl.: B64D 11/06, B60N 2/00

(54) **ÉLÉMENT D'HABILLAGE D'UNE ARÊTE DE COQUE DE SIÈGE AÉRONAUTIQUE, PROCÉDÉ DE FABRICATION ET PROCÉDÉ DE POSE D'UN TEL ÉLÉMENT**

(30) Priorité: 13.01.2022 FR 2200242
(71) Demandeur: Airbus Atlantic SAS, 17300 Rochefort (FR)
(72) Inventeur: RODRIGUEZ, Frédéric, 17300 ROCHEFORT (FR)
(74) Mandataire: Ipside

(57) **Abrégé**

L'invention concerne un élément d'habillage (100) souple d'une arête (210) de coque (200) de siège aéronautique, composé d'un assemblage d'au moins deux découpes (110a, 110b, 11 0c) longiformes, souples et planes, solidarisées unes à unes par des bords longitudinaux respectifs de sorte que l'assemblage possède une forme tridimensionnelle conformée à une arête de coque de siège aéronautique.

L'invention concerne également un procédé (300) de fabrication d'un tel élément d'habillage, ainsi qu'un procédé (400) de pose d'un tel élément d'habillage sur une coque de siège aéronautique.

## Description

### DOMAINE TECHNIQUE

Le domaine de l'invention est celui des sièges aéronautiques, notamment des sièges passagers, des éléments d'habillage de leurs coques, des procédés de fabrication et de pose de tels éléments.

Plus précisément, l'invention concerne un élément d'habillage d'une arête de coque de siège aéronautique, destiné à des fins de finition et de rembourrage ou capitonnage de ladite arête.

Ainsi, l'invention trouve des applications directes dans le domaine aéronautique, toutefois elle peut être également appliquée à tout autre domaine industriel connexe.

### ÉTAT DE LA TECHNIQUE

Une coque de siège aéronautique est une structure tridimensionnelle de forme complexe, généralement réalisée en matière plastique, composite ou métallique.

Dans la conception d'un siège aéronautique comportant une telle coque, la finition du siège au niveau des arêtes de la coque est d'importance capitale, tant au niveau de la protection des arêtes de la coque, qu'au niveau de l'aspect esthétique.

Il est connu de l'art antérieur différentes techniques d'éléments d'habillage de coques de sièges aéronautiques, ainsi que leurs procédés de fabrication associés. De tels éléments d'habillage sont parfois également appelés « cap edge » en terminologie anglaise.

Selon une première technique connue, des éléments d'habillage métalliques sont obtenus par usinage dans la masse d'une matière métallique. Une telle technique, bien que procurant un aspect « haut de gamme », présente l'inconvénient d'un coût matière et d'usinage élevé, et celui d'une masse importante. Ce dernier aspect est particulièrement critique dans le domaine de l'aéronautique, toute économie possible de masse étant recherchée. De plus, de tels éléments d'habillage métalliques ne permettent pas la couverture d'une arête d'une coque d'un seul tenant, en raison du trop grand volume de matière métallique qui serait à usiner dans la masse. Il en résulte la nécessité de réaliser des jonctions entre plusieurs éléments d'habillage, et d'ajuster les éléments d'habillage entre eux, ce qui représente un inconvénient important en termes d'esthétique et de coûts économiques lors de la fabrication et du montage.

Selon une deuxième technique connue, des éléments d'habillage composites sont obtenus par moulage, par exemple par injection ou par thermoformage. Ce type d'éléments d'habillage présente l'inconvénient de nécessiter des investissements élevés, en raison du coût économique élevé des moules. De plus, les moules doivent être renouvelés pour chaque nouvelle forme d'élément d'habillage à fabriquer.

Selon une troisième technique connue, des éléments d'habillage en matière plastique, en particulier en polychlorure de vinyle (PVC), ou en silicone, sont obtenus par extrusion de ces matières. Toutefois, bien que moins coûteuses, ces techniques sont peu esthétiques et ne permettent de couvrir que la partie frontale de l'arête de la coque de siège, sans autoriser de couverture des bords de la coque attenants à l'arête de la coque. En d'autres termes, ces techniques n'autorisent que la fabrication d'éléments d'habillage de section simple, ne permettant qu'une finition basique.

Ainsi, aucun des systèmes actuels ne permet de répondre simultanément à tous les besoins requis, à savoir de proposer une technique d'éléments d'habillage légers et esthétiques, et qui permettent la couverture d'une arête de coque de siège ainsi que des bords de la coque attenants à l'arête, tout en étants peu coûteux, avec une perte de matière minimale.

### EXPOSÉ DE L'INVENTION

La présente invention vise à remédier à tout ou partie des inconvénients de l'état de la technique cités ci-dessus.

À cet effet, l'invention vise un élément d'habillage souple d'une arête de coque de siège aéronautique, composé d'un assemblage d'au moins deux découpes longiformes, souples et planes, solidarisées unes à unes par des bords longitudinaux respectifs de sorte que l'assemblage possède une forme tridimensionnelle conformée à une arête de coque de siège aéronautique.

Par ces dispositions, un élément d'habillage réalisé de manière à simple à partir d'un nombre limité de pièces/d'éléments peut être obtenu. Une arête entière de coque de siège aéronautique peut être couverte à partir de seulement deux découpes, dans une configuration minimale. Le caractère souple des découpes permet l'obtention d'un élément d'habillage lui-même souple, qui s'adapte très précisément à l'arête du siège aéronautique, en plus de procurer un aspect esthétique et haptique plaisant pour un utilisateur. De plus, le matériau d'obtention des découpes étant souple et plan, ce dernier peut être facilement stocké, par exemple sous forme de rouleau, et les découpes elles-mêmes, ainsi que les éléments d'habillage obtenus, peuvent être stockés très aisément du fait de leur caractère souple.

En résumé, les caractéristiques de l'élément d'habillage selon l'invention permettent d'obtenir un élément d'habillage léger et esthétique, couvrant entièrement arête de coque de siège ainsi qu'au moins un bord de la coque attenant à l'arête, tout en étants peu coûteux à fabriquer, du fait de sa conception simple.

L'invention a également pour objet les variantes préférentielles complémentaires suivantes, librement combinables selon toute combinaison techniquement opérante.

Plus particulièrement, selon une variante préférentielle, ladite forme tridimensionnelle correspond à la forme générée par la translation d'une section transversale de l'élément d'habillage le long d'un chemin ouvert de l'espace tridimensionnel, ledit chemin ouvert correspondant au chemin suivi par une arête d'une coque de siège aéronautique.

Ainsi, il est obtenu un élément d'habillage s'adaptant très précisément à l'arête de siège. Il est ainsi possible de poser l'élément d'habillage sur l'arête avec un très faible jeu, participant à la protection efficace de l'arête, et améliorant davantage encore le rendu esthétique et haptique. De plus, dans une telle configuration, l'élément d'habillage présente l'avantage d'être continu le long de l'arête, ce qui renforce sa tenue sur l'arête, et améliore davantage encore le rendu esthétique.

Selon une variante préférentielle, l'élément d'habillage est composé de trois découpes longiformes, l'élément d'habillage possédant une section transversale sensiblement en forme de U.

De cette manière, l'arête ainsi que les deux bords de la coque attenant à l'arête sont couvertes par l'élément d'habillage. Ainsi, la protection et l'aspect esthétique de la coque de siège sont davantage renforcés et améliorés.

Selon une variante préférentielle, les découpes sont solidarisées entre elles par couture, soudure, ou collage.

Selon une variante préférentielle, les découpes sont composées d'un complexage de plusieurs matériaux souples plans.

Ainsi, il est possible de combiner des matériaux possédant différentes propriétés mécaniques et esthétiques. Il est ainsi possible d'obtenir un élément d'habillage adapté à différents usages et à différentes gammes de sièges.

Selon une variante préférentielle, les découpes comprennent un matériau tissé, et/ou du cuir, et/ou du similicuir.

De tels matériaux correspondent à des matériaux souples et plans qui peuvent être aisément découpés et assemblés, et qui présentent des caractéristiques mécaniques et esthétiques recherchées dans le domaine aéronautique en particulier.

Selon une variante préférentielle, au moins une découpe comprend un renfort longiforme fixé sur une surface interne de ladite découpe.

Ainsi, il est possible de renforcer l'élément d'habillage tout en préservant son aspect extérieur. Une plus grande longévité de l'élément d'habillage, et ainsi du siège, est obtenue.

L'invention a également pour objet une coque de siège aéronautique comprenant un élément d'habillage, ledit élément d'habillage étant fixé sur une arête de la coque de siège aéronautique.

L'invention a également pour objet un procédé de fabrication d'un élément d'habillage comprenant :
- une étape de découpe à plat d'un matériau souple et plan, de manière à obtenir lesdites découpes longiformes,
- une étape d'assemblage desdites découpes unes à unes par des bords longitudinaux respectifs.

Ainsi, l'élément d'habillage selon l'invention peut être obtenu à partir d'un nombre limité d'étapes. De plus, lesdites étapes présentent l'avantage d'être particulièrement simples techniquement, et sont réalisables rapidement et ne nécessitent pas l'intervention d'un opérateur qualifié.

En résumé, le procédé permet d'obtenir un élément d'habillage présentant les avantages mentionnés plus en amont, en présentant lui-même l'avantage d'être simple et peu coûteux.

Selon une variante préférentielle, le procédé comprend en outre une étape de formation d'un ourlet, formé sur au moins un bord longitudinal d'au moins une découpe, ladite étape précédant l'étape d'assemblage.

Ainsi, l'effilochage des bords longitudinaux de la découpe peut être évité, et un meilleur rendu esthétique est obtenu.

Selon une variante préférentielle, le procédé comprend en outre une étape de renforcement dans laquelle un renfort est fixé sur une surface interne d'une découpe, ladite étape précédant l'étape d'assemblage.

L'invention a également pour objet un procédé de pose d'un élément d'habillage sur une coque de siège aéronautique, comprenant :
- une étape de préparation, dans laquelle un moyen de collage est appliqué sur les bords attenants à l'arête de la coque,
- une étape de pose, dans laquelle l'élément d'habillage est posé sur l'arête.

Selon une variante préférentielle, le procédé comprend en outre d'une étape de pose d'une mousse sur l'arête de la coque, ladite étape précédant l'étape de pose.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
- Figure 1 est un exemple particulier de réalisation élément d'habillage d'une arête de coque de siège aéronautique ;
- Figure 2 est une vue en coupe de face de l'élément d'habillage disposé en vis-à-vis d'une arête de coque de siège aéronautique selon un exemple particulier de réalisation ;
- Figure 3 est une vue en coupe en perspective de l'élément d'habillage disposé en vis-à-vis d'une arête de coque de siège aéronautique selon un exemple particulier de réalisation ;
- Figure 4 est un jeu de découpes dans un état désassemblé ;
- Figure 5 est une vue détaillée d'un exemple de résultat obtenu après couture des découpes entre elles ;
- Figure 6 est une vue en perspective de l'élément d'habillage, possédant une forme curviligne tridimensionnelle ;
- Figure 7 est un schéma synoptique d'un procédé de fabrication d'un élément d'habillage ;
- Figure 8 est un schéma synoptique d'un procédé de pose d'un élément d'habillage sur une arête de siège aéronautique.

### DESCRIPTION DÉTAILLÉE DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

### Exemple d'un mode de réalisation particulier

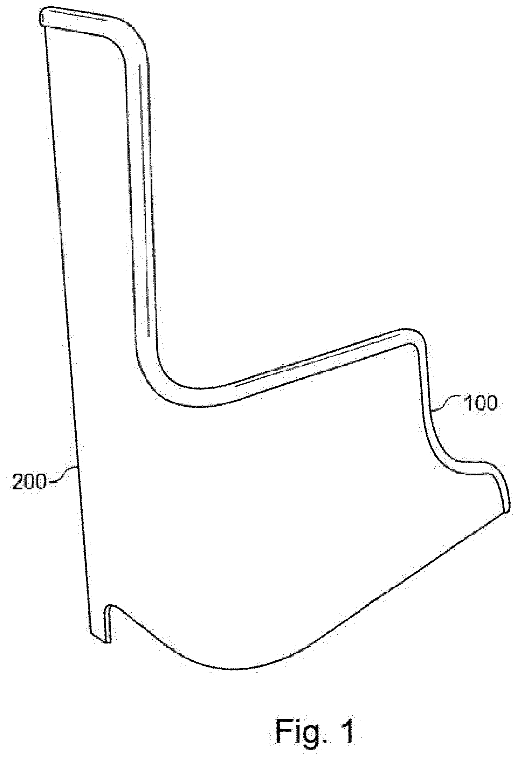

La figure 1 représente un élément d'habillage 100 d'une arête de coque 200 de siège aéronautique selon un exemple particulier de réalisation de l'invention.

L'élément d'habillage 100 est conformé à la forme de l'arête de façon à être apte à la couvrir. On entend par « conformé » le fait que l'élément d'habillage est adapté ou configuré pour couvrir avec exactitude, c'est-à-dire avec un faible jeu, une arête de siège aéronautique. Ainsi, lorsqu'il est disposé sur l'arête, l'élément d'habillage 100 permet la finition de l'arête et par conséquent de la coque 200 de siège. On comprend également qu'un élément d'habillage 100 est conçu spécialement pour couvrir une coque 200 particulière, les formes des coques 200 pouvant varier.

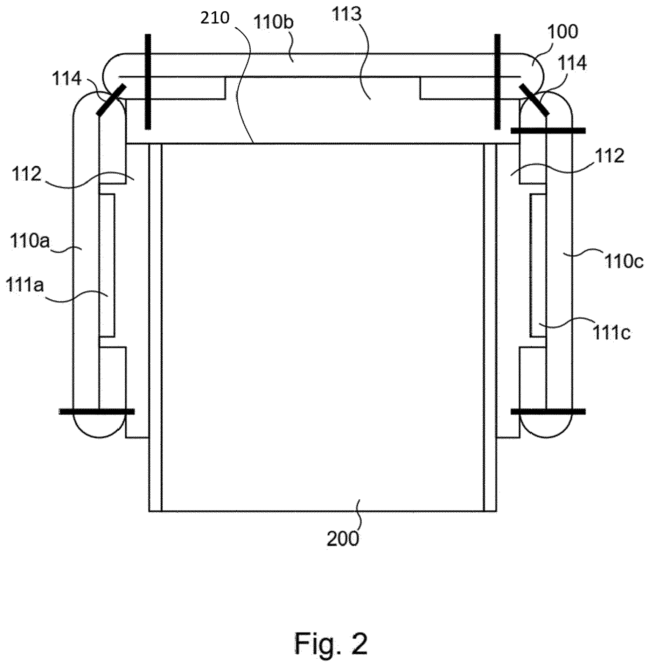

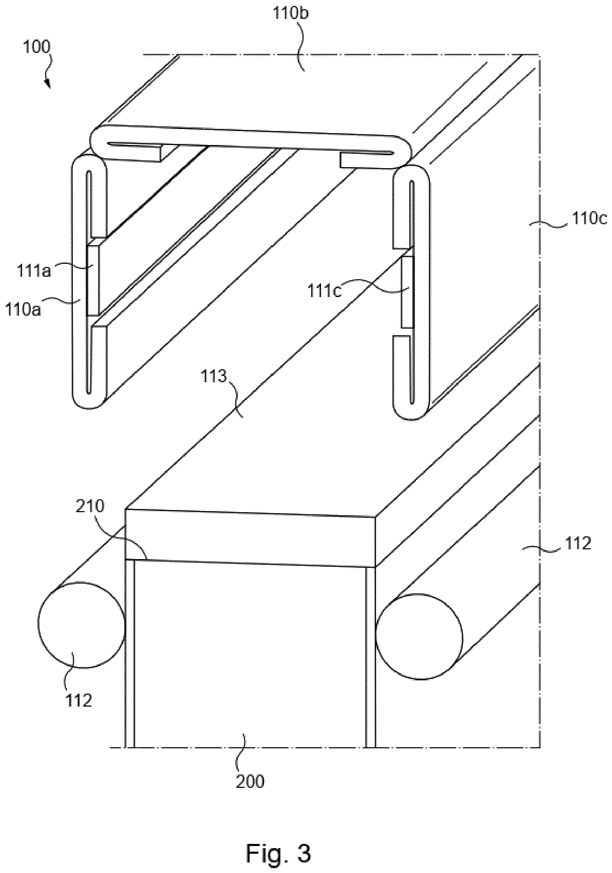

Les figures 2 et 3 représentent une vue en coupe de l'élément d'habillage 100 disposé en vis-à-vis d'une arête 210 de coque 200 de siège aéronautique selon un exemple particulier de réalisation de l'invention, respectivement de face et en perspective. De plus, sur la figure 3, l'élément d'habillage 100 est représenté en vis-à-vis de l'arête de la coque 200, sans toutefois être disposé sur l'arête.

L'élément d'habillage 100 comporte trois découpes 110a, 110b et 110c longiformes. Les découpes 110a, 110b et 110c sont obtenues à partir d'un matériau souple et plan, tel que du cuir, du similicuir ou un matériau tissé, présenté sous forme de drap, de feuille, de film, etc. Une découpe peut également être réalisée à partir de plusieurs sous-découpes, de matériau différent ou non, par exemple solidarisées les unes aux autres. Les découpes 110a, 110b et 110c peuvent également être chacune d'un matériau différent. Les découpes 110a, 110b et 110c peuvent également être obtenues à partir d'un complexage de plusieurs matériaux souples. Le matériau choisi est préférentiellement un matériau particulièrement résistant à l'abrasion, et/ou résistant au feu.

Les trois découpes 110a, 110b et 110c sont assemblées les unes aux autres, l'assemblage des trois découpes 110a, 110b et 110c formant l'essentiel de l'élément d'habillage 100. Dans l'exemple non limitatif représenté sur les figures 2 et3, les trois découpes 110a, 110b et 110c sont assemblées les unes aux autres sensiblement perpendiculairement, tout autre angle pouvant toutefois être délimité entre deux découpes. Un bord longitudinal d'une découpe 110a, 110b ou 110c est solidarisé au plus à un autre bord longitudinal d'une découpe 110a, 110b ou 110c. En d'autres termes, les découpes 110a, 110b et 110c sont assemblées une à une le long de leurs bords longitudinaux. Dans le présent exemple de réalisation, la découpe 110b correspond à une découpe centrale apte à couvrir l'arête 210, et les découpes 110a et 110c correspondent à des découpes latérales disposées de part et d'autre de la découpe 110b centrale, et sont aptes à couvrir les bords attenants à l'arête 210.

L'assemblage précité confère une forme de section transversale de l'élément d'habillage 100 correspondant sensiblement à une forme de U (inversé sur les figures 2 et 3), plus ou moins évasé, lorsque l'élément d'habillage 100 est constitué essentiellement de trois découpes.

On comprend aisément que lorsque l'élément d'habillage 100 comporte deux découpes, la forme de la section transversale correspond sensiblement à celle d'un V, plus particulièrement d'un L lorsque les découpes sont assemblées perpendiculairement.

De la même manière l'élément d'habillage 100 peut comporter plus de trois découpes, comme par exemple quatre découpes, la forme de la section transversale correspondant alors sensiblement à celle d'un W ou d'un M, par exemple.

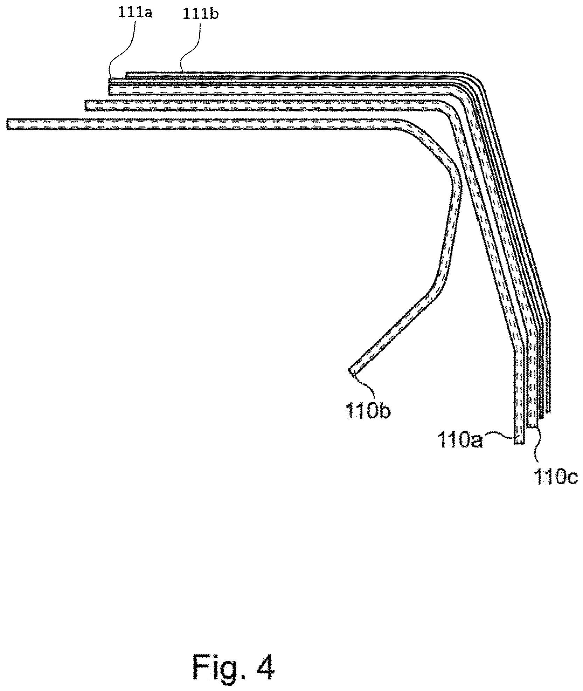

La figure 4 représente un jeu de découpes, comprenant notamment les trois découpes 110a, 110b et 110c dans un état désassemblé. Les découpes 110a, 110b et 110c prennent la forme de bandes curvilignes, c'est-à-dire qu'elles sont de la forme de bandes de matière plane s'étendant sensiblement dans un plan selon un tracé curviligne dans ce même plan. Dans le présent exemple de réalisation, les découpes 110a et 110c latérales prennent sensiblement la même forme.

Sur l'exemple de la figure 4, les découpes 110a, 110b et 110c suivent un tracé curviligne sensiblement en forme de J et de L, toutefois d'autres tracés peuvent être suivis, tels un tracé en forme de S, de U, de C, etc.

Les découpes 110a, 110b et 110c sont assemblées par couture dans le présent exemple de réalisation. D'autres techniques d'assemblages peuvent être également utilisées, tel que le collage ou la soudure, par exemple.

Les découpes 110a, 110b et 110c sont préférentiellement cousues entre elles au niveau des bords longitudinaux par des coutures 114. Une couture 114 peut être simple ou double selon la robustesse souhaitée, le matériau des découpes, etc.

On entend par bord longitudinal le bord d'une découpe s'étendant parallèlement au chemin suivi par l'élément d'habillage 100. Les bords longitudinaux sont en général les bords les plus longs d'une découpe.

Avantageusement, la couture 114 entre deux découpes est réalisée à distance du bord longitudinal, de façon à pouvoir former un ourlet de finition avec l'excès de matière au niveau du bord longitudinal. L'ourlet obtenu, tel que représenté sur les figures 2, prévient de l'effilochage des bords longitudinaux de la découpe, et procure un meilleur rendu esthétique.

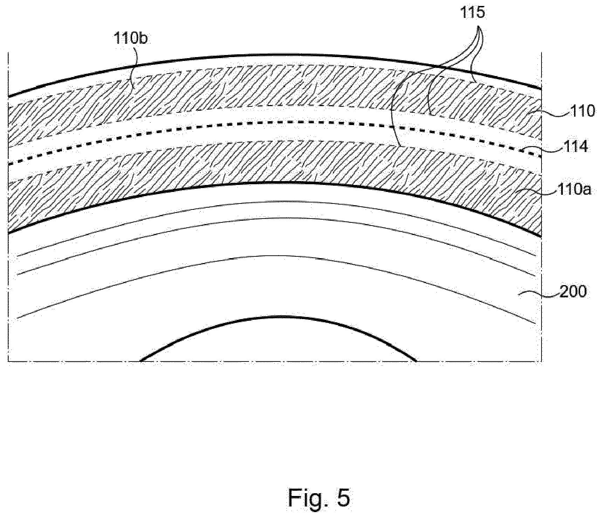

La figure 5 représente une vue détaillée d'un exemple de résultat obtenu après couture des découpes 110a, 110b et 110c entre elles, et formation des ourlets. Les coutures 114 ne sont que très peu visibles, tandis que des coutures 115 permettant de former les ourlets sont visibles et participent au rendu esthétique attrayant de l'élément d'habillage 100.

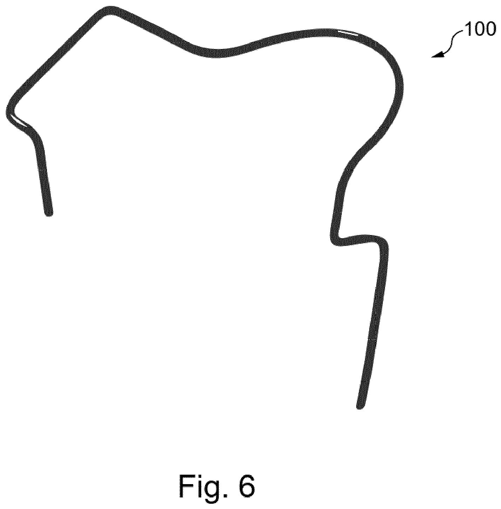

Par l'assemblage des découpes 110a, 110b et 110c, l'élément d'habillage 100 acquiert une forme curviligne tridimensionnelle, tel que cela est représenté par l'exemple d'élément d'habillage 100 de la figure 6. Plus particulièrement, la forme de l'élément d'habillage 100 correspond sensiblement à la forme obtenue par la translation de la section transversale (en forme de U dans le présent exemple de réalisation) le long d'un chemin ouvert dans l'espace tridimensionnel, ledit chemin présentant en tout point la même courbure qu'une surface externe de l'arête 210 de la coque 200. Plus spécifiquement, ce chemin correspond au chemin suivi par l'arête 210 de la coque 200 de siège aéronautique. Ainsi, l'élément d'habillage 100 est apte à être disposé sur l'arête 210 de façon à couvrir cette dernière, l'élément d'habillage 100 étant conformé à la forme de l'arête 210.

Il convient de préciser que la section transversale peut être variable le long du chemin ouvert de l'espace, c'est-à-dire que la forme curviligne tridimensionnelle peut être de section transversale variable. En d'autres termes, cela signifie que la largeur des découpes 110a, 110b et 110c, et en particulier de la découpe 110b, est variable. Il est ainsi possible de s'adapter à une coque de siège qui présenterait une épaisseur non constante.

Une telle forme, tridimensionnelle et curviligne, de l'élément d'habillage 100 est obtenue par le choix de la forme particulière de chacune des découpes 110a, 100b et 110c. Ainsi, à chaque arête 210 de coque correspond un jeu de découpes, comportant au moins deux découpes initialement planes, de forme différente, permettant d'obtenir un assemblage tridimensionnel.

Tel que représenté sur les figures 2 et 3, les découpes 110a et 110c latérales comportent, de manière optionnelle, des renforts 111a et 111c. Les renforts 111a et 111c sont disposés sur une surface interne des découpes 110a et 110c. La surface interne desdites découpes correspond à la surface orientée vers l'arête 210 et ses bords attenants. En d'autres termes, la surface interne est la surface orientée en opposition à une surface externe qui est visible lorsque l'élément d'habillage 100 est disposé sur la coque 200 de siège aéronautique.

De manière similaire aux découpes 110a, 110b et 110c, les renforts 111a et 111c se présentent sous la forme de bandes curvilignes planes, dans un état désassemblé, tel que cela est représenté à la figure 4.

Les renforts 111a et 111c sont préférentiellement réalisés en un matériau rigidifiant, restant toutefois suffisamment souple pour permettre l'assemblage des découpes entre elles. Un tel matériau peut par exemple être un laminat, par exemple de marque Isolvolta (marque déposée), préférentiellement de référence B50. Un équivalent, tel un film thermoplastique, peut également être utilisé. L'épaisseur du matériau utilisé est préférentiellement égal à sensiblement 0,5 millimètres.

Les renforts 111a et 111c peuvent être fixés sur les surfaces internes des découpes 110a et 110c au moyen de toute technique adaptée, et préférentiellement par collage. Le collage peut être effectué par dépose d'une colle, ou encore par pose d'un ruban adhésif de type « double face », c'est-à-dire présentant une masse collante sur chacune de ses faces.

L'élément d'habillage 100 peut être fixé sur la coque 200 au moyen de toute technique adaptée. Préférentiellement, l'élément d'habillage 100 est collé sur la coque 200. Plus précisément, les surfaces internes des découpe 110a et 110c sont collées aux bords attenants à l'arête 210, tel que cela est représenté sur la figure 3, sur laquelle des cordons de colle 112 sont représentés. Sur la figure 2, la colle 112 est répartie sur la surface interne des découpes 110a et 110c, de façon à assurer un maintien ferme de l'élément d'habillage 100 sur la coque 200. A titre d'alternative, une bande adhésive de type double face peut également être utilisée.

Avantageusement, une couche 113 de mousse est disposée entre l'arête 210 et la découpe 110b centrale. Optionnellement, la couche 113 de mouse est collée sur l'arête 210 et/ou la surface interne de la découpe 110b centrale. Préférentiellement, la colle utilisée est à base aqueuse.

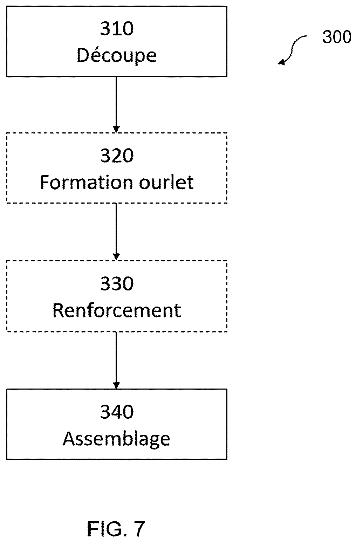

L'élément d'habillage 100 est obtenu par un procédé de fabrication 300 qui est décrit ci-après, illustré par le schéma synoptique de la figure 7.

Au cours d'une étape 310 de découpe à plat, les découpes 110a, 110b et 110c sont obtenues par découpe à plat d'un matériau souple et plan, ou aplani, tel un drap de matière souple ou une feuille de matière souple.

Bien entendu, la découpe peut être optimisée de façon à minimiser les chutes de matières non exploitables, par exemple par utilisation d'un logiciel d'optimisation de découpe lors de la phase programmation d'un automate de découpe.

Optionnellement, au cours d'une étape 320 de formation d'un ourlet, un ourlet est formé sur le bord longitudinal d'une découpe, conformément à ce qui a été exposé plus en amont.

Optionnellement, au cours d'une étape 330 de renforcement, un renfort est fixé sur une surface interne d'une découpe. Par exemple, la fixation du renfort peut se faire par collage.

L'étape 330 de renforcement est représentée consécutive à l'étape 320 de formation d'un ourlet sur la figure 7, toutefois ces étapes peuvent également être inversées de manière indifférente.

Au cours d'une étape 340 d'assemblage, les découpes 110a, 110b et 110c sont solidarisées entre elles, préférentiellement par couture. L'assemblage est effectué au niveau des bords longitudinaux des découpes 110a, 110b et 110c, qui sont liées une à une.

Bien entendu, le procédé de fabrication 300 est généralisable à tout autre nombre de découpes.

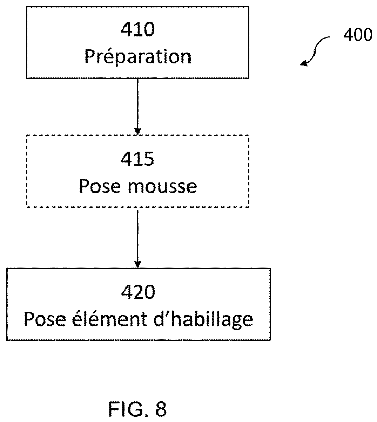

Par ailleurs, un procédé de pose 400 d'un élément d'habillage 100 sur une coque 200 de siège d'aéronef est également décrit ci-après, illustré par le schéma synoptique de la figure 8.

Au cours étape 410 de préparation, un moyen de collage est appliqué sur les bords attenants à l'arête 210 de la coque 200. Selon une variante, une bande adhésive double face est placée sur les bords attenants à l'arête 210, tandis que selon une autre variante, une bande adhésive de masquage est placée sur les bords attenants à l'arête 210, de façon à permettre une bonne application d'un cordon de colle 112 sur lesdits bords attenants.

Optionnellement, au cours d'une étape 415 de pose d'une mousse, la mousse 113 est posée sur l'arête 210. Préférentiellement, la mousse est posée à l'aide d'un outil de maintien dans lequel sont placés des tronçons de mousse, et via lequel une pression sensiblement uniforme peut être appliquée. De cette façon, une pose régulière de mousse 113 peut être assurée.

Au cours d'une étape 420 de pose, l'élément d'habillage 100 est posé sur l'arête 210 (couverte ou non de mousse 113). Préférentiellement, l'élément d'habillage 100 est posé en partant d'une portion fortement incurvée de l'arête 210. Au cours de l'étape 420 de pose, en particulier les découpes 110a et 110c latérales sont lissées sur les bords attenants à l'arête 210, de façon à obtenir une transition esthétique entre une découpe et la coque 200. Préférentiellement, l'élément d'habillage 100 est maintenu en position par un outil adapté (par serrage, sous l'effet d'un poids, etc.) jusqu'à ce que la colle 112 sèche.

## Revendications

1. Élément d'habillage (100) souple d'une arête (210) de coque (200) de siège aéronautique, **caractérisé en ce qu'**il est composé d'un assemblage d'au moins deux découpes (110a, 110b, 110c) longiformes, souples et planes, solidarisées unes à unes par des bords longitudinaux respectifs de sorte que l'assemblage possède une forme tridimensionnelle conformée à une arête de coque de siège aéronautique.

2. Élément d'habillage (100) selon la revendication 1, ladite forme tridimensionnelle correspondant à la forme générée par la translation d'une section transversale de l'élément d'habillage le long d'un chemin ouvert de l'espace tridimensionnel, ledit chemin ouvert correspondant au chemin suivi par une arête (210) d'une coque (200) de siège aéronautique.

3. Élément d'habillage (100) selon l'une quelconque des revendications 1 ou 2, composé de trois découpes (110a, 110b, 110c), l'élément d'habillage possédant une section transversale sensiblement en forme de U.

4. Élément d'habillage (100) selon l'une quelconque des revendications 1 à 3, dans lequel lesdites découpes (110a, 110b, 110c) sont solidarisées entre elles par couture, soudure, ou collage.

5. Élément d'habillage (100) selon l'une quelconque des revendications 1 à 4, dans lequel les découpes (110a, 110b, 110c) sont composées d'un complexage de plusieurs matériaux souples plans.

6. Élément d'habillage (100) selon l'une quelconque des revendications 1 à 5, dans lequel les découpes (110a, 110b, 110c) comprennent un matériau tissé, et/ou du cuir, et/ou du similicuir.

7. Élément d'habillage (100) selon l'une quelconque des revendications 1 à 6, dans lequel au moins une découpe (110a, 110c) comprend un renfort (111a, 111c) longiforme fixé sur une surface interne de ladite découpe (110a, 110c).

8. Coque (200) de siège aéronautique comprenant un élément d'habillage (100) selon l'une des revendications 1 à 7, ledit élément d'habillage (100) étant fixé sur une arête (210) de la coque (200) de siège aéronautique.

9. Procédé (300) de fabrication d'un élément d'habillage (100) selon l'une quelconque des revendications 1 à 7, **caractérisé en ce qu'**il comprend :
- une étape (310) de découpe à plat d'un matériau souple et plan, de manière à obtenir lesdites découpes (110a, 110b, 110c) longiformes,
- une étape (340) d'assemblage desdites découpes (110a, 110b, 110c) unes à unes par des bords longitudinaux respectifs.

10. Procédé (300) selon la revendication 9, comprenant en outre une étape (320) de formation d'un ourlet, formé sur au moins un bord longitudinal d'au moins une découpe (110a, 110b, 110c), ladite étape (320) précédant l'étape (340) d'assemblage.

11. Procédé (300) selon l'une quelconque des revendications 9 ou 10, comprenant en outre une étape (330) de renforcement dans laquelle un renfort (111a, 111c) est fixé sur une surface interne d'une découpe (110a, 110c), ladite étape (320) précédant l'étape (340) d'assemblage.

12. Procédé (400) de pose d'un élément d'habillage (100) selon l'une quelconque des revendications 1 à 7 sur une coque (200) de siège aéronautique, comprenant :
- une étape (410) de préparation, dans laquelle un moyen de collage (112) est appliqué sur les bords attenants à l'arête (210) de la coque (200),
- une étape (420) de pose, dans laquelle l'élément d'habillage (100) est posé sur l'arête (210).

13. Procédé (400) selon la revendication 12, comprenant en outre d'une étape (415) de pose d'une mousse (113) sur l'arête (210) de la coque (200), ladite étape (415) précédant l'étape (420) de pose.
